# EUROPEAN PATENT APPLICATION

(11) **EP 1 596 524 A1**
(43) Date of publication of application: **16.11.2005**
(21) Application number: 05252539.1
(22) Date of filing: 22.04.2005
(51) Int. Cl.: H04L 5/02, H04L 27/26

(54) **Method for subcarrier allocation**

(30) Priority: 10.05.2004 US 842707
(71) Applicant: LUCENT TECHNOLOGIES INC., Murray Hill, New Jersey 07974-0636 (US)
(72) Inventor: Huo, David D., Newton, NJ 07860 (US); Khan, Farooq Ullah, Manalapan, NJ 07726 (US)
(74) Representative: Sarup, David Alexander

(57) **Abstract**

A method is provided for controlling transmissions between a base station and a plurality of mobile station over a plurality of subcarriers. Each mobile station is free to transmit over its own unique set of subcarriers, depending upon the quality of the various subcarriers. That is, the quality of at least a portion of the subcarriers is determined with respect to each mobile station. Thereafter at least a portion of the subcarriers are selected based upon the determined quality, and then information is transmitted to each mobile station using its own unique set of subcarriers.

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

Orthogonal Frequency Division Multiplexing (OFDM) modulation makes an efficient use of the radio spectrum by placing modulated subcarriers as close as possible without causing Inter-Carrier Interference (ICI). OFDM modulation has been adopted in various standards, most notably digital audio broadcast (DAB), digital video broadcast (DVB), asymmetric digital subscriber line (ADSL), IEEE LAN (802.11 a and 802.11g) and IEEE MAN 802.16a. OFDM modulation is also being considered for various next generation wireless standards.

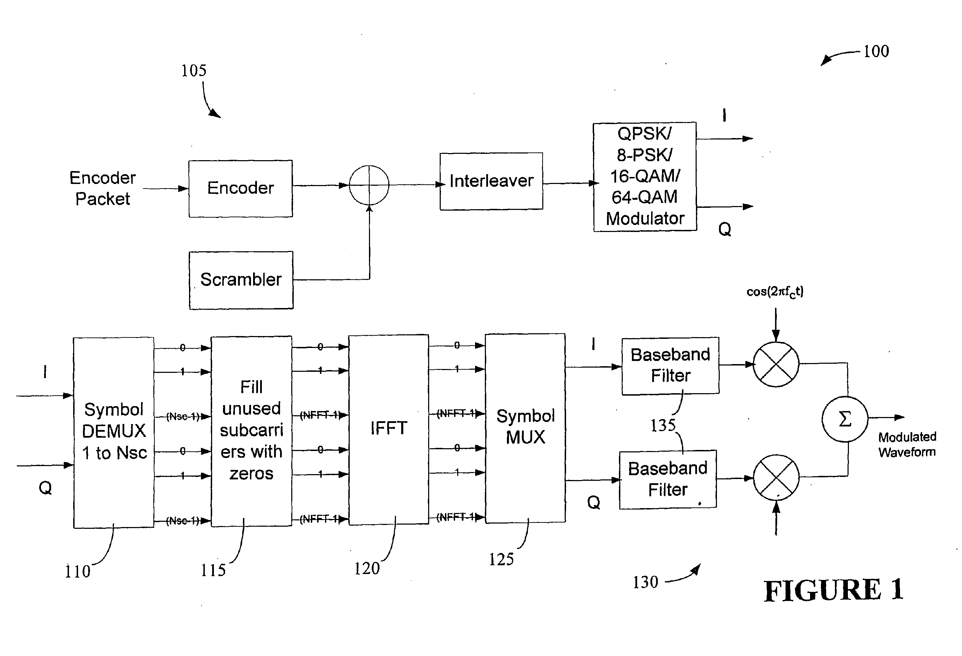

Figure 1 illustrates a stylized representation of a conventional OFDM transmitter chain 100. Generally, a set of information bits called an encoder packet is coded, interleaved and modulated into Q symbols and I symbols by hardware/software/firmware 105. A group of the I and Q symbols are serial-to-parallel converted by a de-multiplexer 110 and mapped to available subcarriers. Unused subcarriers are filled with zeros, and thus, carry no symbols, as stylistically represented at 115. At 120 an IFFT (Inverse Fast Fourier Transform) operation is performed on the subcarrier symbols and the resulting symbols are parallel-to-serial converted by a multiplexer 125 to form a time-domain signal that is quadrature modulated and converted to an RF frequency for transmission by hardware/software/firmware 130. In some embodiments of the OFDM transmitter chain 100, a baseband filter 135 may be employed prior to converting to the RF frequency.

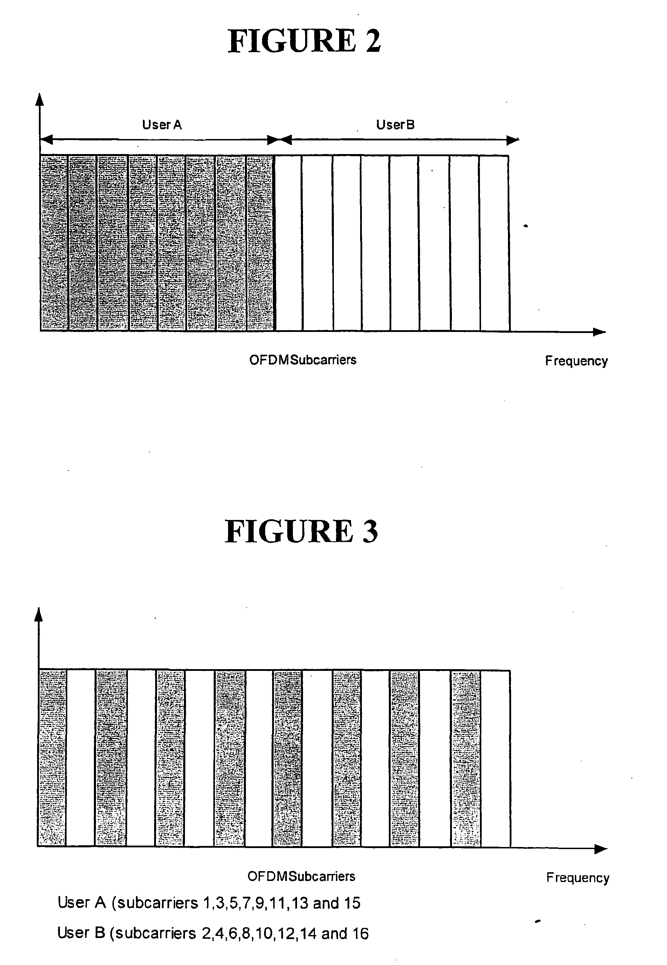

OFDM allows multiplexing multiple users on different subcarriers, as shown in Figures 2 and 3. In Figure 2, a total of 16 subcarriers are shared between 2 users. User A's data is carried over subcarriers 1-8 while user B's data is carried over subcarriers 9-16. Another example of subcarrier allocation is shown in Figure 3. In this example, user A' s data is sent over odd numbered subcarriers while user B's data is sent over even numbered subcarriers. This approach attempted to spread the information from each of the users over the whole bandwidth in order to provide frequency diversity.

Neither of these approaches, however, takes channel quality of the various subcarriers into consideration. That is, each user may experience a wide variation in channel quality over the various subcarriers. Thus, assigning subcarriers without consideration to channel quality results in inefficient use of the scarce radio spectrum.

The present invention is directed to overcoming, or at least reducing, the effects of, one or more of the problems set forth above.

### SUMMARY OF THE INVENTION

In one embodiment of the present invention, a method is provided for controlling transmissions over a plurality of subchannels. The method comprises determining quality of at least a portion of the subchannels, and selecting at least a portion of the subchannels based upon the determined quality. Thereafter, information is transmitted over the selected subchannels.

In an alternative embodiment of the present invention, a method is provided controlling transmissions between a base station and a first and second mobile station over a plurality of subcarriers. The method comprises determining quality of at least a portion of the subchannels between the base station and the first mobile station, and selecting a first portion of the subcarriers between the base station and the first mobile station based upon the determined quality. The quality of at least a portion of the subcarriers between the base station and the second mobile station is also determined, and a second portion of the subcarriers between the base station and the second mobile station are selected based upon the determined quality. Information is transmitted over the selected first portion of the subcarriers to the first mobile station, and over the selected second portion of the subcarriers to the second mobile station.

### BRIEF DESCRIPTION OF THE DRAWINGS

The invention may be understood by reference to the following description taken in conjunction with the accompanying drawings, in which like reference numerals identify like elements, and in which:
Figure 1 illustrates a stylized representation of an OFDM transmitter chain;
Figure 2 illustrates a stylized representation of one embodiment of a subcarrier sharing arrangement;
Figure 3 illustrates a stylized representation of another embodiment of a subcarrier sharing arrangement;
Figure 4 illustrates a stylized representation of an exemplary subcarrier allocation scheme;
Figure 5 illustrates an exemplary technique for forming subpackets and assigning the subpackets to specified subcarriers in a Hybrid ARQ system;
Figure 6 stylistically illustrates an exemplary subcarrier allocation;
Figure 7 stylistically illustrates an exemplary hybrid CDMA/OFDM transmission over an uplink;
Figure 8 illustrates one embodiment of a method for estimating frequency response on the uplink;
Figure 9 illustrates one embodiment of a method for estimating frequency response on the downlink;
Figure 10 stylistically illustrates channel quality and frequency response feedback; and
Figure 11 stylistically illustrates an exemplary uplink scheduling.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Generally, a subcarrier allocation scheme is proposed that exploits the diversity of the channel types seen by different users in order to enhance the received SNR (Signal to Noise Ratio). In a wireless environment, a mix of channels with different number of paths, path delays and path power profiles are observed in a given cell. This results in different frequency response for different users in the cell. Therefore, users with different channels can be scheduled/multiplexed onto their "preferred" OFDM subcarriers in order to improve the overall received SNR and hence the system throughput and capacity.

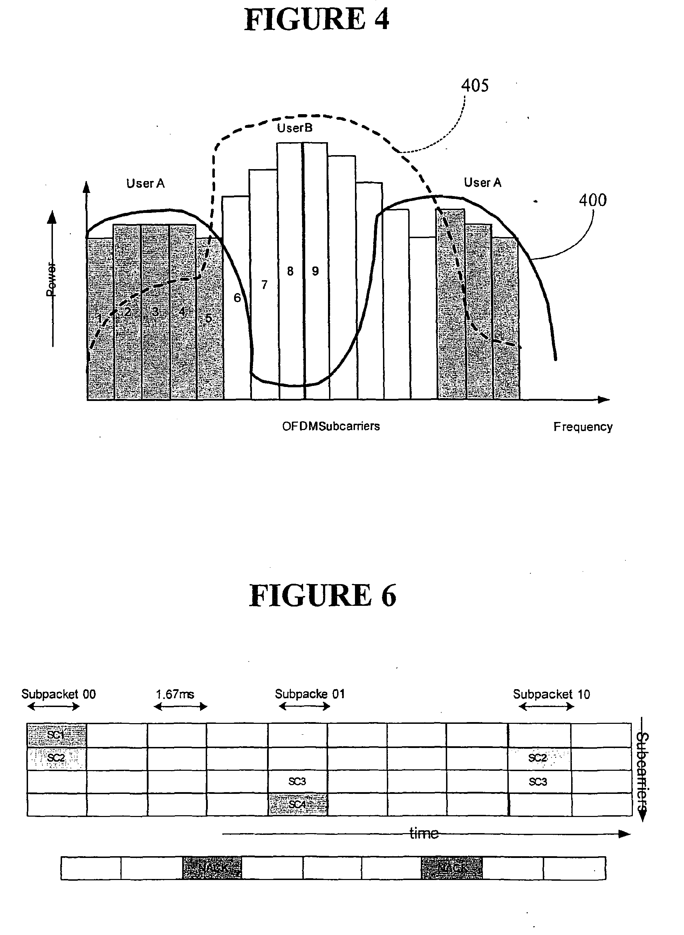

An example of the proposed frequency-response based subcarrier allocation technique is provided in Figure 4. In this example, user A is allocated its "preferred" subcarriers 1-5, 14, 15 and 16 while user B's information is carried over subcarriers 6-13. The decision on which carriers to allocate to a given user may be based on the channel quality of the subcarriers for that user. Since different users in a wireless environment generally see different channel types, the set of "preferred" subcarriers for different users is generally also different. Figure 4 also shows the frequency responses 400, 405 for users A and B, respectively, showing their preferred subcarriers.

In general, a base station allocates subcarriers to different users transmitting on the uplink and the downlink. The frequency response can be estimated based on the received signals on the uplink. For example, the base station can estimate the impulse response of the received signal and then determine the frequency response by taking a Fast Fourier Transform (FFT) of the impulse response. It is also possible for the mobile stations to report back to the base station the information on their "preferred" subcarriers.

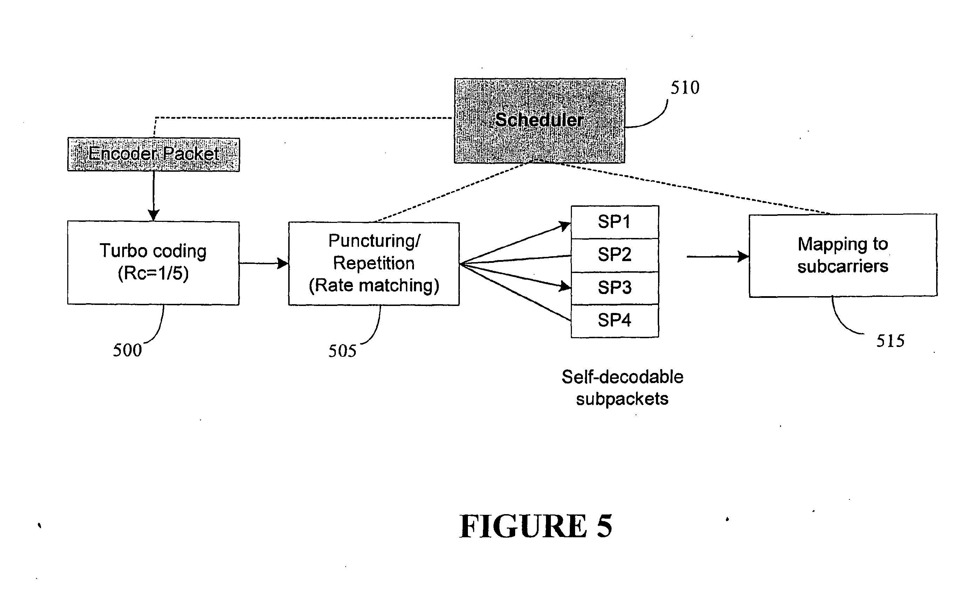

In a communication system using Hybrid ARQ, the subcarriers can be allocated on a subpacket-by-subpacket basis. An example of subpackets formation in a Hybrid ARQ system is shown in Figure 5. An information packet, referred to herein as the encoder packet, is provided as an input signal to a channel encoder 500. In an exemplary embodiment of the instant invention, the channel encoder 500 may employ turbo coding with rate 1/5 code. The channel encoder 500 adds redundancy to the information providing capability to correct errors at the receiver. A sequence of coded bits provided by the encoder 500 is punctured and/or repeated at 505 to form subpackets, such as subpackets SP1-SP4. Those skilled in the art will appreciate that the number of subpackets formed are a function of design criteria and depends, among other factors, upon the base coding rate and the maximum number of retransmission attempts allowed in the Hybrid ARQ process. In an exemplary embodiment of the instant invention, the four subpackets SP1-SP4 formed from the information packet are each self-decodable, *i.e.* the information packet (encoder packet) can potentially be recovered from any single one of the subpackets. However, the principles of the present invention can readily be applied to the case of non self-decodable subpackets.

The subpackets SP1-SP4 may then be routed or mapped to appropriate subcarriers under the control of a scheduler 210, as illustrated at 215. By controlling the mapping of the subpackets SP1-SP4, a "preferred" subcarrier allocation may be effected.

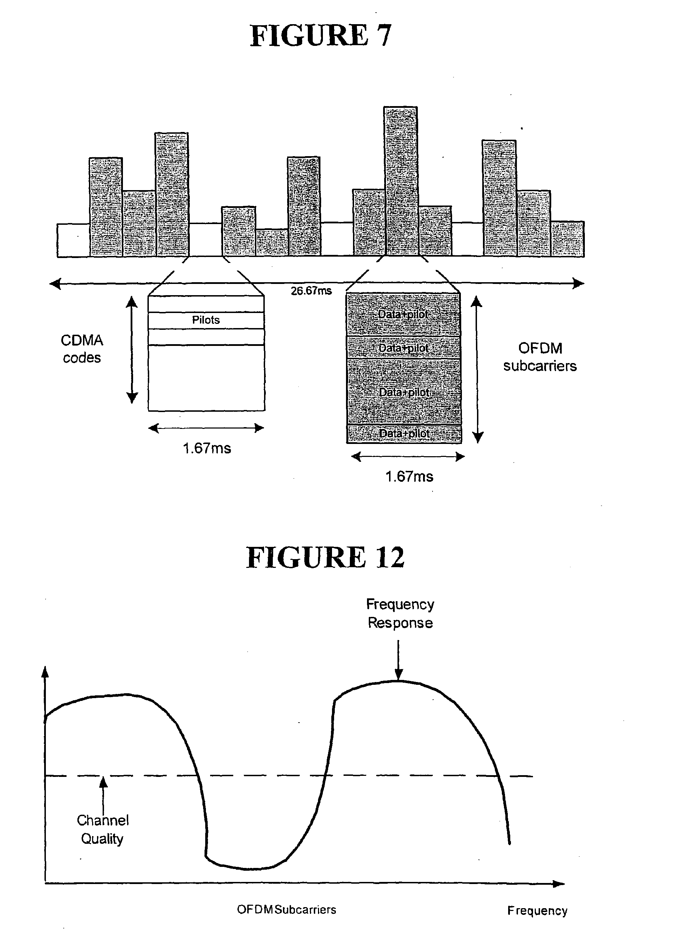

An example of subcarrier allocation to hybrid ARQ subpackets is depicted in Figure 6. In this example, subpacket 00 is assigned to and sent over subcarriers (SC) 1 and 2 (or groups of subcarriers). The subcarriers are selected based on their channel quality for that particular user. The channel quality of different subcarriers (or groups of subcarriers) may change over time due to fading channel conditions. Therefore, the set of "preferred" subcarriers for a user might also change. In the example of Figure 6, at the time that subpacket 01 is transmitted, subcarriers 3 and 4 are the "preferred" subcarriers for this user. Therefore, subpacket 01 is transmitted on subcarriers 3 and 4 in response to a NACK received from the receiver. Similarly, the third subpacket 10 is transmitted over its preferred subcarriers 2 and 3. In this example, all the subpackets use two subcarriers (or groups of subcarriers). However, the principles of the present invention can readily be applied to the case where different subpackets are transmitted using a different number of subcarriers.

Figure 6 shows an example of an uplink channel having alternating CDMA power controlled (PC) and OFDM slots for the case of a 1xEV-DO system. The transmissions in power control slots carry physical layer control signaling and are power controlled as in a conventional CDMA system. The OFDM slots are used for user data transmissions in an OFDMA (Orthogonal Frequency Division Multiple Access) fashion i.e. multiple users can potentially transmit on orthogonal subcarriers within a slot. A more detailed description of this hybrid CDMA/OFDM system may be found in co-pending U.S. Application No. , filed on the same day herewith by the same inventors listed herein and entitled Hybrid Wireless Communications System; which is hereby incorporated by reference in its entirety.

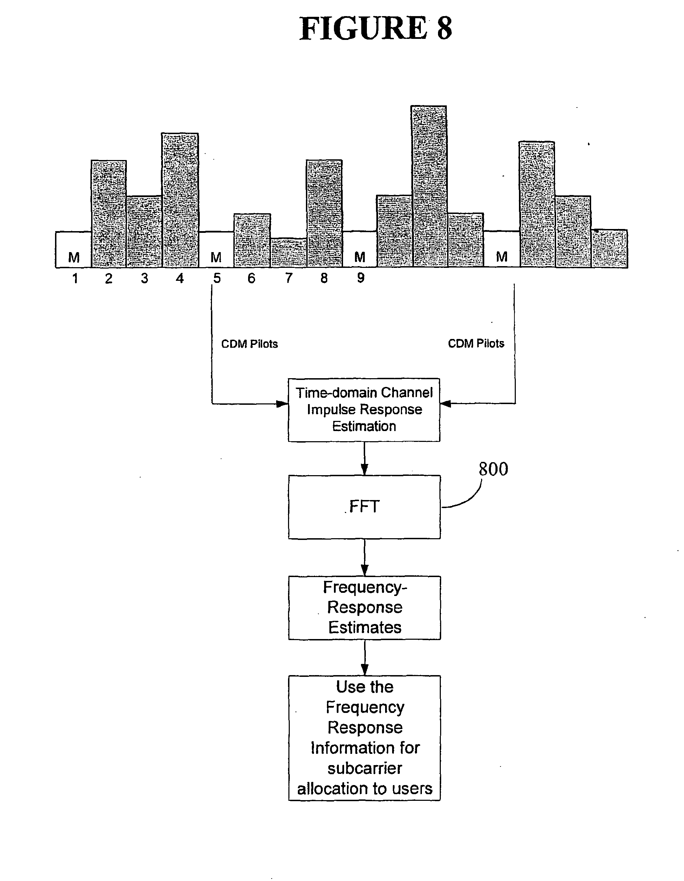

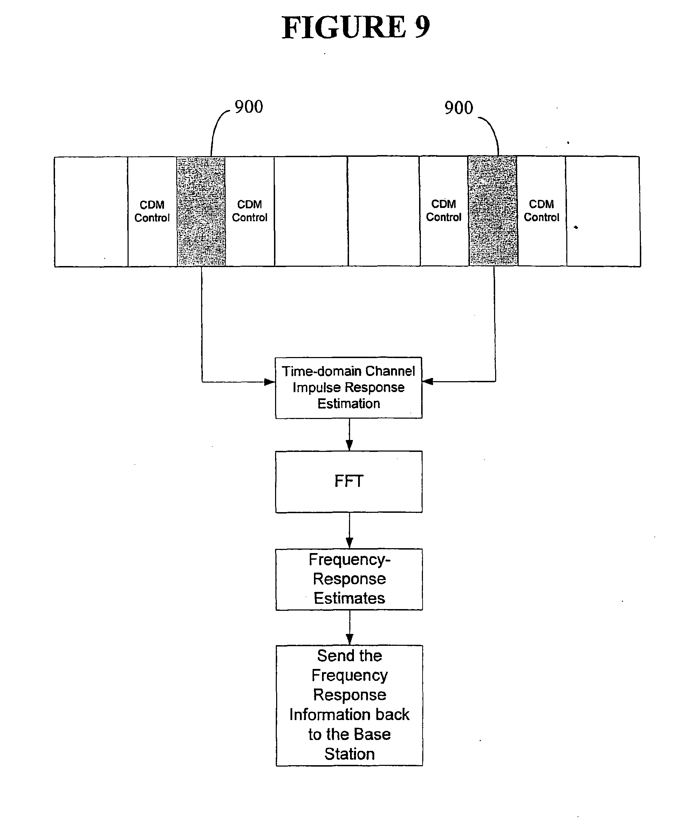

As discussed above, subcarriers are allocated to different users based on the quality of the different subcarriers, as viewed by the user. The relative quality of different subcarriers can be determined based on the frequency response measurements over a pilot signal. A dedicated pilot signal for each of the active user is carried in the CDM slots. This dedicated pilot signal may be used to measure or calculate a frequency response for that user. The frequency response can be measured based on well-known techniques. One possible method for determining frequency response is to determine the channel impulse response based on signal quality on RAKE receiver fingers. The frequency response can then be obtained by taking an FFT (at 800) of the channel impulse response as shown in Figure 8. In the downlink, TDM pilots 900 can be used for frequency response estimation, as shown in Figure 9. In an FDD (Frequency Division Duplex) system such as 1xEV-DO, different carrier frequencies are used for the uplink and downlink signals. Therefore, with the assumption that both uplink and downlink transmissions from all the users are controlled by a centralized scheduler, the mobiles have to send the frequency response information (e.g., set of preferred subcarriers) back to the base station. This is due to the fact that at a given time, the downlink frequency response can be different from the uplink frequency response because different carrier frequencies are used in the uplink and the downlink. In the case of uplink transmissions, the frequency response can be estimated at the base station using the uplink pilots as show in Figure 8.

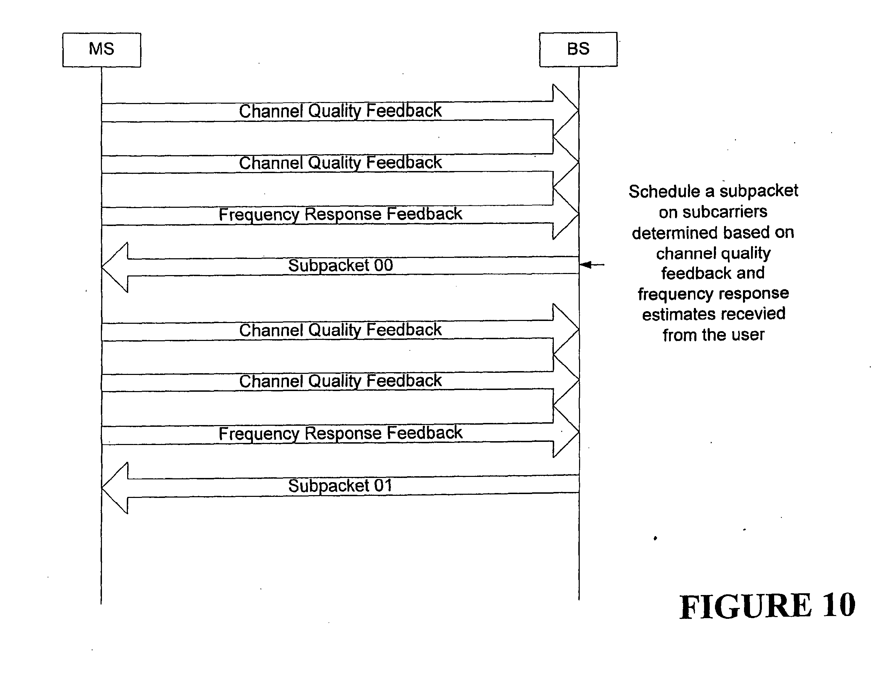

The CDM pilots on the uplink and the TDM pilots on the downlink in the case of the 1xEV-DO system considered here are transmitted over the whole carrier bandwidth. Therefore, it is also possible to estimate the overall channel quality for a user based on the signal quality measurements across the whole carrier bandwidth. This channel quality information can then be used along with the frequency response to determine the absolute channel quality on different subcarriers. For example, mobile stations can report the channel quality or DRC (Data Rate Control) information back to the base station for the whole carrier bandwidth. This information on the frequency response can be fed back separately. The base station can then use these two pieces of information to determine the channel quality of the individual subcarriers (or groups of subcarriers) for a given user. The rate of feedback for these two sets of information feedback can be different. For example, the overall channel quality measured across the whole subcarrier can be sent back to the base station on a frequent basis while the information on frequency response can be fed back at a slower rate as shown in Figure 10. In this example, the channel quality feedback is provided at twice the rate of the frequency response feedback. This approach would maximize the efficiency of the feedback channel.

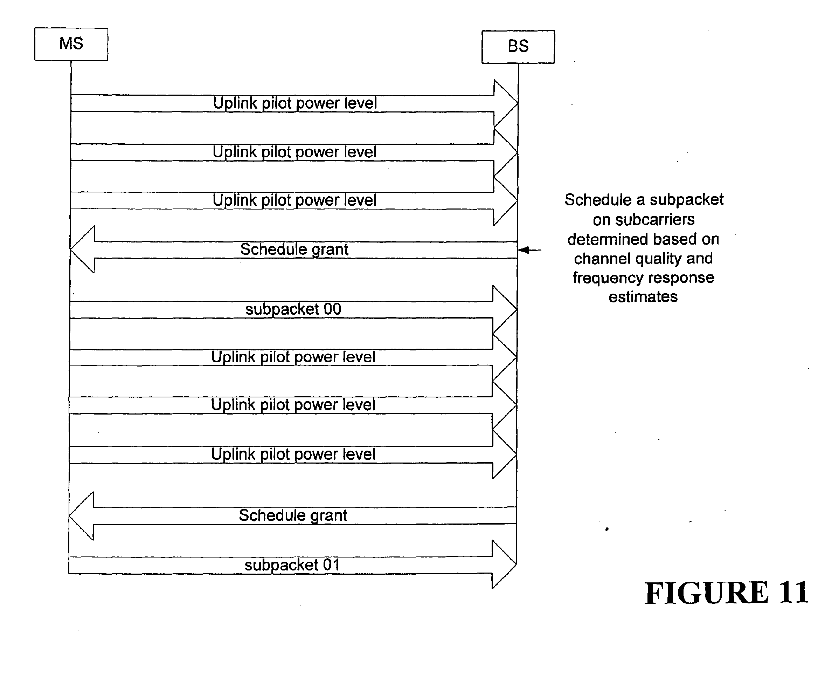

In the case of uplink, there is no need for frequency response feedback because this information can be derived from the received pilot measurements as described previously. However, the information about the overall channel quality on the uplink may be needed in order to determine the absolute channel quality on each of the subcarriers (or groups of subcarriers). One possible way of deriving the channel quality information is by using the information on transmit and receive power of the uplink pilots. The received pilot can be measured at the base station while the mobile pilot transmit power can be provided to the base station via a feedback channel as shown in Figure 11. Other possibilities, such as polling a designated pilot from the mobile station to obtain clean estimate of the channel, can be deployed with some additional signaling overhead. The base station can then schedule the user on its preferred subcarriers based on the frequency response information and the overall channel quality information derived from the uplink pilot transmit and received power levels.

Figure 12 shows the joint channel quality and frequency response information. Note that the channel quality provides information on the absolute quality, such as signal-to-noise-plus-interference ratio (SINR), over a period of time while the frequency response provides information on the relative SINR of the subcarriers. These two pieces of information can be used to predict the SINR of the individual subcarriers.

Those skilled in the art will appreciate that the various system layers, routines, or modules illustrated in the various embodiments herein may be executable control units (such as scheduler 510 (see Figure 5)). The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method for controlling transmissions over a plurality of subcarriers, the method comprising:
determining quality of at least a portion of the subcarriers;
selecting at least a portion of the subcarriers based upon the determined quality; and
transmitting information over the selected subcarriers.

2. A method, as set forth in claim 1, wherein selecting at least the portion of the subcarriers based upon the determined quality further comprises selecting the subcarriers having the highest quality.

3. A method, as set forth in claim 1, wherein selecting at least the portion of the subcarriers based upon the determined quality further comprises selecting subcarriers having a determined quality that exceeds a preselected setpoint.

4. A method, as set forth in claim 1, wherein transmitting information over the selected subcarriers further comprises forming the information into a plurality of subpackets and transmitting each subpacket over at least one of the selected subcarriers.

5. A method, as set forth in claim 1, wherein determining quality of at least a portion of the subcarriers further comprises determining frequency response over a pilot signal for each subcarrier.

6. A method, as set forth in claim 5, wherein determining frequency response over a pilot signal for each subcarrier further comprises determining a channel impulse response based on signal quality.

7. A method for controlling transmissions between a base station and a first and second mobile station over a plurality of subcarriers, the method comprising:
determining quality of at least a portion of the subcarriers between the base station and the first mobile station;
selecting a first portion of the subcarriers between the base station and the first mobile station based upon the determined quality;
determining quality of at least a portion of the subcarriers between the base station and the second mobile station;
selecting a second portion of the subcarriers between the base station and the second mobile station based upon the determined quality;
transmitting information over the selected first portion of the subcarriers to the first mobile station; and
transmitting information over the selected second portion of the subcarriers to the second mobile station.

8. A method, as set forth in claim 7, wherein selecting a first portion of the subcarriers between the base station and the first mobile station based upon the determined quality further comprises selecting the subcarriers having the highest quality.

9. A method, as set forth in claim 7, wherein selecting a first portion of the subcarriers between the base station and the first mobile station based upon the determined quality further comprises selecting subcarriers having a determined quality that exceeds a preselected setpoint.

10. A method, as set forth in claim 7, wherein transmitting information over the selected first portion of the subcarriers to the first mobile station further comprises forming the information into a plurality of subpackets and transmitting each subpacket over at least one of the selected subcarriers.
